# EUROPÄISCHE PATENTANMELDUNG

(11) **EP 4 765 777 A1**
(43) Veröffentlichungstag der Anmeldung: **24.06.2026**
(21) Anmeldenummer: 25222704.6
(22) Anmeldetag: 11.12.2025
(51) Int. Cl.: H04L 67/12, H04L 67/565

(54) **VERFAHREN ZUM ÜBERSETZEN VON FAHRZEUGSIGNALEN UND VERFAHREN ZUM BETREIBEN EINES FAHRZEUGS**

(30) Priorität: 19.12.2024 DE 102024139071
(71) Anmelder: Robert Bosch GmbH, 70442 Stuttgart (DE)
(72) Erfinder: Loesch, Felix, 70197 Stuttgart (DE); Henkel, Achim, 70563 Stuttgart (DE); Kerstan, Christian, 71640 Ludwigsburg (DE)

(57) **Zusammenfassung**

Die Erfindung betrifft ein Verfahren zum Übersetzen von Fahrzeugsignalen, wobei erste Signale, die einem ersten Standard entsprechen, mittels eines Neutralformats in zweite Signale übersetzt werden, die einem zweiten Standard entsprechen. Die Erfindung betrifft außerdem ein Verfahren zum Erstellen eines Signal Knowledge Graphen und ein Verfahren zum Betreiben eines Fahrzeugs.

## Beschreibung

### Stand der Technik

Steuergeräte in Fahrzeugen nutzen definierte Signale (zum Beispiel gemessenen Werte von Sensoren oder Steuergrößen für Aktuatoren), um das Fahrzeug elektronisch zu steuern und zu regeln. Diese Signale werden innerhalb der Steuergeräte in der Steuergeräte-Software verwendet. Durch die ständig zunehmende Vernetzung und Konnektivität der Fahrzeuge (zum Beispiel WLAN, LTE, 5G) besteht die Möglichkeit, die Steuergeräte-internen Signale außerhalb der Fahrzeuge zu verarbeiten (zum Beispiel in einer Edge Cloud oder Public Cloud). Aktuell existieren jedoch sehr viele heterogene Standards zu Beschreibung von Fahrzeugsignalen (zum Beispiel AUTOSAR, AUTOSAR adaptive, AUTOSAR interchange Format, Some IP, Vehicle Signal Spezifikation, Google vHAL, ...), die von den Steuergerätelieferanten oder von den Fahrzeugherstellern verwendet werden.

Um datengetriebene Services zu entwickeln, die Fahrzeugsignale benötigen, ist es entweder notwendig, diese Services in der Cloud auf den jeweils in den Steuergeräten und Fahrzeugen verwendeten Standard für die Signal-Beschreibung anzupassen oder die Services auf Basis eines Standards zu entwickeln und dann Signale, die in anderen Standards beschrieben sind, entsprechend auf den verwendeten Standard für den Service abzubilden. Dies führt jedoch bei mehr als 50 Standards schnell dazu, dass sehr viele Abbildungen zwischen den Standards notwendig werden. Bei direkter Abbildung jedes Standards mit jedem anderen Standard sind bei 50 Standards beispielsweise 1225 Abbildungen nötig.

### Offenbarung der Erfindung

Das erfindungsgemäße Verfahren zum Übersetzen von Fahrzeugsignalen, hat demgegenüber den Vorteil, dass erste Signale, die einem ersten Standard entsprechen, mittels eines Neutralformats in zweite Signale übersetzt werden, die einem zweiten Standard entsprechen. Diese Übersetzung kann insbesondere automatisiert ablaufen. Vorteilhafterweise werden somit deutlich weniger Abbildungen benötigt als ohne Verwendung des erfindungsgemäßen Verfahrens.

Besonders vorteilhaft ist, zunächst die Signale des ersten Standards in das Neutralformat zu übersetzen und anschließend die Signale von dem Neutralformat in den zweiten Standard zu übersetzen.

Vorteilhaft ist, wenn das Neutralformat durch eine Ontologie, insbesondere einen Knowledge Graphen repräsentiert ist. Ein Knowledge Graph stellt insbesondere Entitäten und deren Verbindungen in Form eines graphenbasierten Modells dar, wobei die Entitäten als Knoten und die Beziehungen als Kanten repräsentiert werden. Bei den Entitäten kann es sich beispielsweise um Komponenten eines Fahrzeugs oder Klassen handeln.

Vorteilhat ist, wenn der erste Standard und der zweite Standard durch Ontologien, insbesondere Knowledge Graphen repräsentiert werden.

Vorteilhaft ist, wenn der Knowledge Graph des ersten Standards mit dem Knowledge Graph des Neutralformats verknüpft wird, indem jede Signalklasse des ersten Standards mit einer Eigenschaftsklasse des Neutralformats verknüpft wird. Insbesondere kann für die Verknüpfung der Signalklassen eine Relation, insbesondere die Relation "isLinkedToNeutralFormat" verwendet werden. Bei der Eigenschaftsklasse kann es sich insbesondere um die Klasse "VehicleProperty" handeln. Die Klasse "VehicleProperty" ist insbesondere im Neutralformat definiert. Eine Verknüpfung auf Klassenebene gibt abstrakt an, dass Fahrzeugsignale eines Standards mit Signalen des Neutralformats über die Relation "isLinkedToNeutralFormat" verknüpft werden können.

Vorteilhaft ist, wenn Instanzen des ersten Standards mit Instanzen des Neutralformats verknüpft werden. Insbesondere vorteilhaft ist, Signale des ersten Standards und Signale des Neutralformats als Instanzen zuvor definierter Klassen in ihren jeweiligen Ontologien, insbesondere Knowledge Graphen, zu definieren.

Vorteilhaft ist ein Verfahren zum Erstellen eines Signal Knowledge Graphen, der eine Verknüpfung einer Vielzahl von Standards darstellt, wobei Signale aller Standards als Instanzen mit Signalen eines Knowledge Graphen eines Neutralformats verknüpft werden, um so den Signal Knowledge Graphen zu erhalten.

Die vorgestellten Ausführungsbeispiele der Erfindung eignen sich insbesondere um Komplexität im Zusammenspiel von verschiedenen Softwaremodulen im Kontext von Fahrzeugen zu reduzieren. Daher ist besonders vorteilhaft: Ein Verfahren zum Betreiben eines Fahrzeugs, wobei Fahrzeugsignale mittels des erfindungsgemäßen Verfahrens übersetzt werden oder die Fahrzeugsignale unter Verwendung eines Signal Knowledge Graphen, der mittels des oben beschriebenen Verfahrens erstellt ist, übersetzt werden, und das Fahrzeug ausgehend von den übersetzten Fahrzeugsignalen betrieben wird. Bei den Fahrzeugsignalen kann es sich beispielsweise um einen Beschleunigungswunsch oder einen Öffnungszustand einer Fahrzeugtür handeln. Das Verfahren kann daher vorteilhafterweise z.B. zum softwaregestützten Öffnen einer Fahrzeugtür oder zum Umsetzen eines Beschleunigungswunsches verwendet werden.

Insbesondere lässt sich das erfindungsgemäße Verfahren anwenden, wenn Software eines ersten Herstellers eine Ansteuergröße für eine Software eines zweiten Herstellers bereitstellt. Beispielsweise kann eine App, die ein Ablegen von Paketen in einem Fahrzeugkofferraum ermöglicht, einen Befehl zum Öffnen einer Heckklappe generieren, der dann anschließend von einer Software einer Türsteuerung des Fahrzeugs umgesetzt wird. Das vorgestellt Verfahren ermöglicht daher vorteilhafterweise eine Vielzahl neuartiger Softwareservices für Fahrzeuge, die ohne automatisierte Übersetzung der Fahrzeugsignale auf Grund der Variantenvielfalt in Fahrzeugen nicht wirtschaftlich darstellbar wären. Auch die Integration klassischer Fahrzeugsoftware wird durch das vorgestellte Verfahren erheblich erleichtert. Eine größere Variantenvielfalt bei der Softwareausstattung von Fahrzeugen wird daher ebenfalls ermöglicht.

Nachfolgend wird ein Ausführungsbeispiel der vorliegenden Erfindung anhand der beiliegenden Zeichnung näher erläutert. Dabei zeigt:

### Kurze Beschreibung der Zeichnung

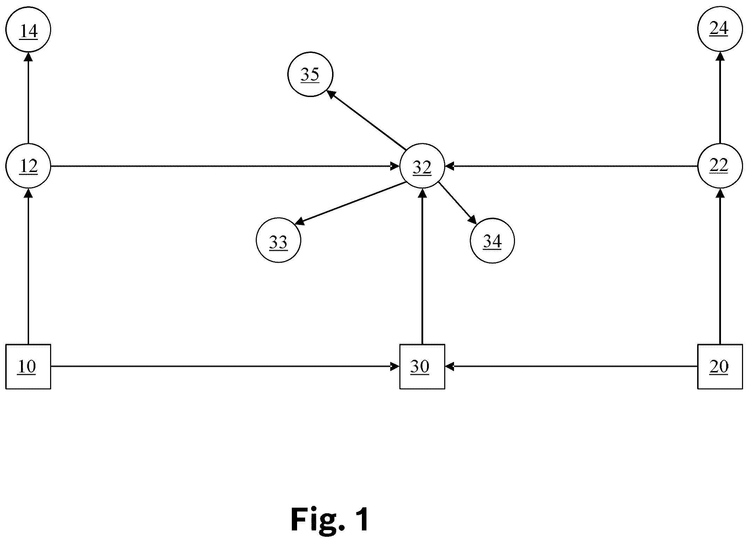

- Fig. 1: eine schematische Darstellung einer Verknüpfung zweier Standards über ein Neutralformat.

### Ausführungsformen der Erfindung

In einem ersten Ausführungsbeispiel der Erfindung wird in einem ersten Schritt eine Ontologie, insbesondere ein Knowledge Graph zur semantischen Beschreibung der Signale eines Standards gebildet. Hierbei wird zunächst eine Ontologie des Standard definiert, die abstrakt eine Definition von Fahrzeugsignalen und ihrer Metadaten beschreibt. Dieser Schritt wird für jeden Standard, der automatisiert übersetz werden soll, wiederholt. Zusätzlich wird das Neutralformat durch eine Ontologie, insbesondere einen Knowledge Graphen, beschrieben. Hierfür wird insbesondere die Ontologie des Neutralformats gebildet.

In einem zweiten Schritt werden die Ontologien der Standards und die Ontologie des Neutralformats miteinander verknüpft. Hierbei wird jede Klasse, die in einem Standard für die Beschreibung von Fahrzeugsignalen verwendet wird, mittels einer Relation mit dem Neutralformat verknüpft. Insbesondre wird hierfür die Relation "isLinkedToNeutralFormat" verwendet, die mit der Klasse "VehicleProperty" im Neutralformat verlinkt wird.

In einem dritten Schritt werden die Signale aller Standards sowie Signale des Neutralformats als Instanzen der zuvor definierten Klassen in den jeweiligen Ontologien definiert. Hierdurch wird ein Signal Knowledge Graph gebildet. Eine Motortemperatur in einem ersten Standard kann dabei wie folgt instanziiert werden: "En-gineTemperature" ist eine Instanz der Klasse "VehicleSignal". "Engine" ist eine In-stanz der Klasse "VehicleComponent". Die Instanzen "EngineTemperatur" und "En-gine" sind über die Beziehung "isSignalOfVehicleComponent" verknüpft. Die Klas-sen "VehicleSignal" und "VehicleComponent" sind ebenfalls über die Beziehung "isSignalOfVehicleComponent" verknüpft. Da in den Ontologien zwischen den Klas-sen "VehicleSignal" die Relation "isLinkedToNeutralFormat" definiert ist, welche wiederum auf die Klasse "VehicleProperty" zeigt, kann diese Relation auch auf In-stanzebene übertragen werden und dort für die Verknüpfung der Signale verwendet werden. Eine derartige Verknüpfung aller Signale aller Standards bildet insbesondere den Signal Knowledge Graph.

Eine Übersetzung eines Signals eines ersten Standards in ein Signal eines zweiten Standards kann dann insbesondere derart ablaufen, dass ausgehend von den im Signal Knowledge Graph repräsentierten Relationen und Verknüpfungen zunächst eine Übersetzung des Signals des ersten Standards in das Neutralformat erfolgt. Anschließend folgt die Übersetzung vom Neutralformat in den zweiten Standard.

Das vorgestellte Verfahren ist dabei nicht auf die Verwendung von zwei Standards beschränkt, sondern kann zur Übersetzung zwischen beliebig vielen Standards verwendet werden.

Figur 1 zeigt eine schematische Darstellung der Verknüpfung von Signalen eines ersten Standards "A" und Signalen eines zweiten Standards "B" am Beispiel einer Motortemperatur. Bei dem in Figur 1 illustrierten Bespiel handelt es sich insbesondere um ein Bespiel eines Signal Knowledge Gaphen.

Im Standard "A" ist die Motortemperatur (10), die beispielsweise mit "EngineTempe-rature" bezeichnet sein kann, eine Instanz der Klasse "VehicleSignal" (12). Die Klasse "VehicleSignal" (12) wiederum ist über die Relation "isSignalOfVehicleComponent" mit der Klasse "VehicleComponent" (14) verknüpft.

Im Standard "B" ist die Motortemperatur (20), die beispielsweise mit "TempEng" bezeichnet sein kann, eine Instanz der Klasse "Signal" (22). Die Klasse "Signal" (22) wiederum ist über eine Relation mit der Klasse "ClassXYZ" (24) verknüpft.

Die Motortemperatur im Neutralformat (30) ist beispielsweise mit "EngineTemp" bezeichnet und eine Instanz der Klasse "VehicleProperty" (32). "VehicleProperty" (32) zeigt im dargestellten Beispiel auf die weiteren Klassen "NumericProperty" (33), "EnumerationProprety" (34) und "VehicleArea" (35) des Neutralformats.

Die Motortemperatur der Klasse "A" (10) ist über die Relation "isLinkedToNeutralFormat" mit der Motortemperatur im Neutralformat (30) "EngineTemp" verknüpft. Die Motortemperatur der Klasse "B" (10) ist ebenfalls über die Relation "isLinkedToNeutralFormat" mit der Motortemperatur im Neutralformat (30) "EngineTemp" verknüpft. Die Klasse "VehicleSignal" (12) des Standards "A" ist über die Relation "isLinkedToNeutralFormat" mit der Klasse "VehicleProperty" (32) des Neutralfor-mats verknüpft. Die Klasse "Signal" (22) des Standards "B" ist ebenfalls über die Relation "isLinkedToNeutralFormat" mit der Klasse "VehicleProperty" (32) des Neutralformats verknüpft.

Über die oben beschriebenen Verknüpfungen kann die Motortemperatur des Standards "A" (10) in die Motortemperatur des Standards "B" (20) übersetzt werden, ohne dass hierfür eine direkte Zuordnung der beiden Standards "A" und "B" nötig wäre, da das Neutralformat die Möglichkeit einer Zwischenübersetzung bietet. Insbesondere bei Betrachtung von mehr als zwei Standards ergeben sich daher große Vorteile in Bezug auf Flexibilität und Handhabbarkeit von Variantenvielfalt.

## Patentansprüche

1. Verfahren zum Übersetzen von Fahrzeugsignalen, **dadurch gekennzeichnet, dass** erste Signale, die einem ersten Standard entsprechen, mittels eines Neutralformats in zweite Signale übersetzt werden, die einem zweiten Standard entsprechen.

2. Verfahren nach Anspruch 1, **dadurch gekennzeichnet, dass** das Neutralformat durch einen Knowledge Graphen repräsentiert ist.

3. Verfahren nach einem der Ansprüche 1 oder 2, **dadurch gekennzeichnet, dass** der erste Standard und der zweite Standard durch Knowledge Graphen repräsentiert werden.

4. Verfahren nach Anspruch 2 und 3, **dadurch gekennzeichnet, dass** der Knowledge Graph des ersten Standards mit dem Knowledge Graph des Neutralformats verknüpft wird, indem jede Signalklasse des ersten Standards mit einer Eigenschaftsklasse des Neutralformats verknüpft wird.

5. Verfahren nach einem der Ansprüche 3 oder 4, **dadurch gekennzeichnet, dass** Instanzen des ersten Standards mit Instanzen des Neutralformats verknüpft werden.

6. Verfahren zum Erstellen eines Signal Knowledge Graphen, der eine Verknüpfung einer Vielzahl von Standards darstellt, **dadurch gekennzeichnet, dass** Signale aller Standards als Instanzen mit Signalen eines Knowledge Graphen eines Neutralformats verknüpft werden, um so den Signal Knowledge Graphen zu erhalten.

7. Verfahren zum Betreiben eines Fahrzeugs, **dadurch gekennzeichnet, dass** Fahrzeugsignale mittels des Verfahrens nach einem der Ansprüche 1 bis 5 übersetz werden oder die Fahrzeugsignale unter Verwendung eines Signal Knowledge Graphen, der mittels des Verfahrens nach Anspruch 6 erstellt ist, übersetzt werden, und das Fahrzeug ausgehend von den übersetzten Fahrzeugsignalen betrieben wird.
